(19) Europäisches Patentamt / European Patent Office / Office européen des brevets

(11) **EP 3 472 365 B1**

(12) **EUROPEAN PATENT SPECIFICATION**

(45) Date of publication and mention
of the grant of the patent:
**27.11.2019 Bulletin 2019/48**

(21) Application number: **17813692.5**

(22) Date of filing: **07.06.2017**

(51) Int Cl.:
*C22C 38/44* (2006.01)     *C22C 38/06* (2006.01)
*C22C 38/02* (2006.01)     *C22C 38/04* (2006.01)
*C22C 38/00* (2006.01)     *B22F 9/08* (2006.01)
*C22C 33/02* (2006.01)     *C22C 33/04* (2006.01)
*B22F 1/00* (2006.01)     *C23C 4/067* (2016.01)

(86) International application number:
**PCT/SE2017/050604**

(87) International publication number:
**WO 2017/217913 (21.12.2017 Gazette 2017/51)**

(54) **STEEL SUITABLE FOR PLASTIC MOULDING TOOLS**

STAHL FÜR KUNSTSTOFFFORMWERKZEUGE

ACIER APPROPRIÉ POUR OUTILS DE MOULAGE DE PLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2016 SE 1650850**

(43) Date of publication of application:
**24.04.2019 Bulletin 2019/17**

(73) Proprietor: **Uddeholms AB
683 85 Hagfors (SE)**

(72) Inventors:
• **KARAMCHEDU, Venkata Seshendra
416 81 Göteborg (SE)**
• **MEDVEDEVA, Anna
131 52 Nacka Strand (SE)**
• **OIKONOMOU, Christos
652 17 Karlstad (SE)**
• **SPARREVOHN VANG, Jesper Erik Joachim
118 28 Stockholm (SE)**
• **DAMM, Petter
652 29 Karlstad (SE)**

(74) Representative: **Zacco Sweden AB
P.O. Box 5581
114 85 Stockholm (SE)**

(56) References cited:
EP-A1- 0 459 547          EP-A1- 2 927 337
EP-A2- 0 210 035          EP-A2- 2 722 407
WO-A1-2006/068610       WO-A1-2015/137507
WO-A1-2015/137507       WO-A1-2016/099390
GB-A- 1 056 561          JP-A- H02 225 649
JP-A- H02 310 339        US-A- 3 278 298
US-A- 3 556 776          US-A- 3 556 776
US-A- 3 658 513          US-A1- 2013 287 620

**Description**

TECHNICAL FIELD

The invention relates to a steel. In particular, the invention relates to precipitation hardening steel suitable for the manufacturing of plastic moulding tools.

BACKGROUND OF THE INVENTION

Precipitation hardening stainless steels embrace 17-7PH, 17-4 PH, 15-5 PH, PH 15-7Mo, PH 14-8Mo and PH 13-8Mo. The latter steel is also designated 1.4534, X3CrNiMoAl13-8-2 and S13800. The chemical composition of PH 13-8 Mo is (in wt. %): C: $\leq$ 0.05, Si: $\leq$ 0.1, Mn: $\leq$ 0.1, P: $\leq$ 0.01, S: $\leq$ 0.008, Cr: 12.25 - 13.25, Ni: 7.5 - 8.5, Mo: 2.0 - 2.5, N: $\leq$ 0.01, Ti: $\leq$ 0.1, Al: 0.8 - 1.35, balance Fe. A steel of this type is known as Böhler N709.
EP 459 547 discloses a precipitation hardenable stainless steel intended for plastic forming moulds, wherein the nitrogen content is restricted as much as possible in order to avoid the formation of hard nitrides, which impair the polishability.
Steels of this type are commonly used for parts requiring a high strength and a good toughness. Typical applications of these steels are aircraft parts, springs and plastics moulds.
These steels are often delivered in a solution treated condition and are hardenable by aging to a hardness in the range of 34 - 52 HRC. Important properties are a high strength and corrosion resistance as well as a good polishability. In addition thereto, plastic mould steels should also have a good machinability and good welding properties such that the steels can be welded without preheating and postheating.
A precipitation hardening stainless steel powder is disclosed in WO 2015/137507 A1.

DISCLOSURE OF THE INVENTION

This invention is directed to an alternative composition to an alloy of the type PH 13-8Mo.
The object of the present invention is to provide a steel having an improved property profile and being suitable for plastic moulding. In particular the present invention aims at providing a precipitation hardening mould steel having a high strength and toughness as well as a high cleanliness, a good polishability and uniform properties also in large dimensions. In addition thereto, the invention aims at providing the steel in form of powder, in particular but not restricted to steel powder suitable for Additive Manufacturing (AM).
A further object is to provide a steel, which can be used to obtain articles having a prolonged life.
The foregoing objects, as well as additional advantages are achieved to a significant measure by providing a steel as defined in the alloy claims. A high and uniform hardness in combination with a high toughness result in a steel with good resistance to indentations and a minimum risk of unexpected failure, leading to a safer mould and a long tool life. The present inventors have found that it is possible to obtain a good polishability of the steel provided that the maiximum size of the hard aluminium nitrides is controlled to be no larger than 4 $\mu$m.
The invention is defined in the claims.
The general object is solved by providing a steel consisting of, in weight % (wt. %):

|  | Min | Max |
|---|---|---|
| C | 0.02 | 0.04 |
| Si | 0.1 | 0.4 |
| Mn | 0.1 | 0.5 |
| Cr | 11 | 13 |
| Ni | 7.8 | 10 |
| Cr+Ni | 19.5 | 23 |
| Mo | 1 | 25 |
| Al | 1.4 | 2.0 |
| N | 0.01 | 0.75 |
| optionally |  |  |
| Cu | 0.05 | 2.5 |
| B | 0.002 | 2.0 |
| S | 0.01 | 0.25 |
| Nb |  | 0.01 |

(continued)

|  | Min | Max |
|---|---|---|
| Ti |  | 2 |
| Zr |  | 2 |
| Ta |  | 2 |
| Hf |  | 2 |
| Y |  | 2 |
| Ca | 0.0003 | 0.009 |
| Mg |  | 0.01 |
| O | 0.003 | 0.80 |
| REM |  | 0.2 |

Fe and impurities balance.

Preferably, the steel fulfils at least one of the following requirements:

|  | Min | Max |
|---|---|---|
| C | 0.025 | 0.035 |
| Si | 0.15 | 0.40 |
| Mn | 0.15 | 0.50 |
| Cr | 11.5 | 12.5 |
| Ni | 8.5 | 10.0 |
| Cr+Ni | 20 | 23 |
| Mo | 1.0 | 2.0 |
| Al | 1.5 | 1.9 |
| N | 0.01 | 0.15 |
| S | 0.01 | 0.03 |

and/or the steel has a mean hardness in the range of 320-510 $HBW_{10/3000}$, wherein the steel has a thickness of at least 100 mm and the maximum deviation from the mean Brinell hardness value in the thickness direction measured in accordance with ASTM E10-01 is less than 10 %, preferably less than 7%, less than 5 %, less than 3 % or even less than 1 %, and wherein the minimum distance of the centre of the indentation from the edge of the specimen or edge of another indentation shall be at least two and a half times the diameter of the indentation and the maximum distance shall be no more than 4 times the diameter of the indentation,
and/or
the steel has a cleanliness fulfilling the following maximum requirements with respect to micro-slag according to ASTM E45-97, Method A:

| A | A | B | B | C | C | D | D |
|---|---|---|---|---|---|---|---|
| T | H | T | H | T | H | T | H |
| 1.5 | 1.0 | 1.5 | 1.0 | 1.0 | 1.0 | 1.5 | 1.0 |

Preferably, the steel has a cleanliness fulfilling the following maximum requirements:

| A | A | B | B | C | C | D | D |
|---|---|---|---|---|---|---|---|
| T | H | T | H | T | H | T | H |
| 1.0 | 0 | 1.5 | 1.0 | 0 | 0 | 1.5 | 1.0 |

The steel may be alloyed with S in order to improve the machinability. However, it need not be alloyed with S, in particular when produced by Powder Metallurgy (PM). The steel composition may then fulfil at least one of the following requirements:

|       | Min  | Max  |
|-------|------|------|
| N     | 0.01 | 0.04 |
| Cu    | 0.5  | 2.1  |
| Cr+Ni | 20.5 | 22.0 |
| Mo    | 1.2  | 1.6  |
| S     |      | 0.01 |
| Ti    |      | 0.01 |
| Zr    |      | 0.01 |
| Ta    |      | 0.01 |
| Hf    |      | 0.01 |
| Y     |      | 0.01 |

wherein the microstructure may fulfil at least one of the following requirements:

the matrix comprises $\geq$ 75 vol. % martensite,
the matrix comprises $\leq$ 7 vol. % delta ferrite,
the matrix comprises 2 - 22 vol. % austenite,
the matrix hardness is 40 - 56 HRC,
the size of all AlN particles is $\leq 4\mu m$,
the un-notched impact toughness is $\geq$ 200 J,
the compressive yield strength $Rc_{0.2}$ is at 10 - 30 % higher than the tensile yield strength $Rp_{0.2}$.

In a particular embodiment the steel fulfils the following requirements:

|       | Min   | Max   |
|-------|-------|-------|
| C     | 0.025 | 0.035 |
| Si    | 0.15  | 0.40  |
| Mn    | 0.15  | 0.50  |
| Cr    | 11.5  | 12.5  |
| Ni    | 8.5   | 10.0  |
| Cr+Ni | 20    | 23    |
| Mo    | 1.0   | 2.0   |
| Al    | 1.5   | 1.9   |
| N     | 0.01  | 0.15  |

wherein the microstructure fulfils at least one of the following requirements:

the matrix comprises $\geq$ 80 vol. % martensite,

the matrix comprises 4 - 20 vol. % austenite.

The steel alloy can be provided in the form of a pre-alloyed powder having a composition as shown above.
The pre-alloyed powder can be produced by gas atomizing. It is preferred that at least 80 % of the powder particles have a size in the range of 5 to 150 $\mu m$ so that the powder fulfils at least one of the following requirements:

| Powder size distribution (in $\mu m$): | $5 \leq$ | D10 | $\leq 35$ |
|---|---|---|---|
|  | $20 \leq$ | D50 | $\leq 55$ |
|  |  | D90 | $\leq 80$ |
| Mean sphericity, SPHT | $\geq 0.85$ |  |  |
| Mean aspect ratio, b/l | $\geq 0.85$ |  |  |

wherein SPHT = $4\pi A/P^2$, where A is the measured area covered by a particle projection and P is the measured perimeter/circumference of a particle projection and the sphericity (SPHT) is measured by a Camsizer in accordance with ISO 9276-6, and wherein b is the shortest width of the particle projection and 1 is the longest diameter.

It is even possible that at least 90 % of the powder particles have a size in the range of 10 to 100 $\mu$m and that the powder fulfils at least one of the following requirements:

| | | | |
|---|---|---|---|
| Powder size distribution (in $\mu$m): | 10 $\leq$ | D10 | $\leq$ 30 |
| | 25 $\leq$ | D50 | $\leq$ 45 |
| | | D90 | $\leq$ 70 |
| Mean sphericity, SPHT | $\geq$ 0.90 | | |
| Mean aspect ratio, b/l | $\geq$ 0.88 | | |

The pre-alloyed described above can be used to form an article by the use of an additive manufacturing method. The article may fulfil at least one of the following requirements:

the matrix comprises $\geq$ 80 vol. % martensite,
the matrix comprises $\leq$ 5 vol. % delta ferrite,
the matrix comprises 2 - 22 vol. % austenite,
the matrix hardness is 34 - 56 HRC,
the size of all AlN particles is $\leq$ 4$\mu$m,
the Charpy V-notch value perpendicular to the build direction is $\geq$ 5 J,
the tensile strength $R_m$ perpendicular to the build direction is $\geq$ 1600 MPa,
the yield strength $Rc_{0.2}$ perpendicular to the build direction is $\geq$ 1500 MPa,
the compressive yield strength $Rc_{0.2}$ perpendicular to the build direction is at least 10 % higher than the tensile yield strength $Rp_{0.2}$.

Preferably, the article is at least a part of a mould for forming plastic and the said article may optionally fulfil at least one of the following requirements:

the matrix comprises $\geq$ 85 vol. % martensite,
the matrix comprises $\leq$ 2 vol. % delta ferrite,
the matrix comprises 4 - 15 vol. % austenite,
the matrix hardness is 40 - 50 HRC,
the Charpy V-notch value perpendicular to the build direction is $\geq$ 10 J.

The invention is also directed to the use of the inventive pre-alloyed powder for making a solid object by the use of any of the methods of hot isostatic pressing, powder extrusion and additive manufacturing or for providing a surface layer on a substrate by thermal spraying, laser cladding, cold spraying or overlay welding.

DETAILED DESCRIPTION

The importance of the separate elements and their interaction with each other as well as the limitations of the chemical ingredients of the claimed alloy are briefly explained in the following. All percentages for the chemical composition of the steel are given in weight % (wt. %) throughout the description. The amount of hard phases is given in volume % (vol. %). Upper and lower limits of the individual elements can be freely combined within the limits set out in the claims.

**Carbon** (0.02 - 0.04 %)

Carbon is effective for improving the strength and the hardness of the steel. However, if the content is too high, the steel may be difficult to machine after cooling from hot working. C should be present in a minimum content of 0.02 %, preferably at least 0.025 %. The upper limit for carbon is 0.04 %, preferably 0.035 %. The nominal content is 0.030 %.

**Silicon** (0.1 - 0.4 %)

Silicon is used for deoxidation. Si is also a strong ferrite former. Si is therefore limited to 0.4%. The upper limit may be 0.40, 0.35, 0.34, 0.33, 0.32, 0.31, 0.30, 0.29 or 0.28 %. The lower limit may be 0.12, 0.14, 0.16, 0.18 or 0.20%. Preferred ranges are 0.15 - 0.40 % and 0.20 - 0.35 %.

**Manganese** (0.1 - 0.5 %)

Manganese contributes to improving the hardenability of the steel. If the content is too low then the hardenability may be too low. At higher sulphur contents manganese prevents red brittleness in the steel. Manganese shall therefore be present in a minimum content of 0.10 %, preferably at least 0.15, 0.20, 0.25 or 0.30 %. The steel shall contain maximum 0.5 % Mn, preferably maximum 0.45, 0.40 or 0.35 %. A preferred range is 0.20 - 0.40 %.

**Chromium** (11 - 13 %)

Chromium is to be present in a content of at least 11 % in order to make the steel stainless and to provide a good hardenability in larger cross sections during the heat treatment. However, high amounts of Cr may lead to the formation of high-temperature ferrite, which reduces the hot-workability. The lower limit may be 11.2, 11,4, 11.6 or 11.8 %. The upper limit Cr is 13 % and the amount of Cr may be limited or 12.8, 12.6, 12.4 or 12.2 %. A preferred range is 11.5 - 12.5 %.

**Nickel** (7.8 - 10 %)

Nickel is an austenite stabilizer, which and supresses the formation of delta ferrite. Nickel gives the steel a good hardenability and toughness. Nickel is also beneficial for the machinability and polishability of the steel. Nickel is essential for the precipitation hardening as it together with Al form minute intermetallic NiAl-particles during aging. However, excess Ni additions may result in too high an amount of retained austenite. The lower limit may therefore be 7.8, 8.0, 8.2, 8.4, 8.6, 8.8, 9.0 or 9.1 %. The upper limit may be 10.0, 9.8, 9.6 or 9.4 %. A preferred range is 8.5 - 10 or 9.0 - 9.5 %.

**Chromium + Nickel** (19.5 - 23%)

In order to obtain an optimized strength and toughness it is desirable, that the total content of Cr and Ni is 19.5 - 23 %. The lower amount may be 19.5, 20.0, 20,5 20.6, 20.7, 20.8 or 20.9% . The upper limit may be 22.8, 22.7, 22.6, 22.5, 22.4, 22.3, 22.2, 22.1, 22.0, 21.9, 21.8, 21.7, 21.6, 21.5, 21.4 or 21.3% A preferred range is 20.5 - 22.0 %, preferably 20.5 - 22.0, most preferably 20.8 - 21.7 %.

**Molybdenum** (1 - 25 %)

Mo in solid solution is known to have a very favourable effect on the hardenability. Molybdenum is a strong carbide forming element and also a strong ferrite former. A controlled amount of Mo in the matrix counteracts the formation of reverted austenite during aging. For this reason the amount of Mo should be 1 - 2 %. The lower limit may be 1.1, 1.2, 1.3 or 1.4 %. The upper limit may be 1.9, 1.8, 1.7, 1.6, or 1.5 %.

Molybdenum can also be used in higher amounts in combination with Boron in order to obtain a desired amount of hard borides of the type $M_2M'B_2$, where M and M' stand for metals. In the present case M is Mo and M' is Fe. However, the boride may contain minor amounts of other elements such as Cr and Ni. However, in the following boride will simply be referred to as $Mo_2FeB_2$.

The maximum content of molybdenum is therefore 25 %. However, when using high Mo contents for forming borides, then the contents of Mo and B should be balanced such that the content of Mo in solid solution in the matrix remains in the range of 1 -2 %.

**Aluminium** (1.4 - 2.0 %)

Aluminium is used for precipitation hardening in combination with Ni. The upper limit is restricted to 2.0 % in order to avoid the formation of too much delta ferrite. The upper limit may be 1.95, 1.90, 1.85, 1.80 or 1.75 %. The lower limit may be 1.45, 1.50, 1.55, 1.60 or 1.65 %.

**Nitrogen** (0.01 - 0.75 %)

Nitrogen is a strong austenite former and also a strong nitride former. N may be used in in an amount of up to 0.75 % in Nitride Dispersion Strengthened (NDS) alloys. NDS alloys can be produced with basically the same techniques as ODS alloys.

However, for non-NDS applications the nitrogen content may be restricted to 0.15 %.

The inventors of the present invention have surprisingly found, that nitrogen can be deliberately added to the steel without impairing the polishability, provided that the size of at least 80 vol. % of AIN particles present in the matrix is limited to not more than 4 $\mu$m. Preferably, the said size may restricted to 3 $\mu$m, 2 $\mu$m or even 1 $\mu$m. The small size of the nitrides also results in a grain refining effect. The lower limit for N may then be 0.011, 0.012, 0.013, 0.014, 0.015, 0.016, 0.017, 0.018, 0.019 or 0.02%. The upper limit may be 0.14, 0.12, 1.10, 0.08, 0.06, 0.05, 0.04 or 0.03 %. However, if the material is in powder form and intended for production of moulds or dies by the use of AM, then it is to be considered that a too high nitrogen content may result in too high an amount of retained austenite. Accordingly, for applications where the amount of austenite in structure is to be limited, then the upper limit of nitrogen can be set to 0.040, 0.035, 0.030, 0.025 or 0.020 %.

**Copper** (0.05 - 2.5 %)

Cu is an optional element, which may contribute to increase the hardness and the corrosion resistance of the steel. The $\epsilon$-Cu phase formed during aging not only reinforces the steel by precipitation hardening, but also affects the precipitation kinetics of the intermetallic phases. In addition thereto, it would appear that additions of Cu result in a slower growth of the intermetallic phase (NiAl) at higher working temperatures. The upper limit for Cu may be 2.3, 2.1, 1.9,1.7, 1.5, 1.3, 1.1, 0.9, 0.7, 0.5, 0.3 or even 0.2 %. The lower limit for Cu may 0.2, 0.3, 0.4, 0.5, 0.6, 0.7, 0.8 or 0.9 %.
However, it is not possible to extract copper from the steel once it has been added. This makes the scrap handling more difficult. For this reason, copper is an optional element and needs not be added. The maximum allowable impurity content can be 0.2, 0.15 or 0.10%.

**Boron** (0.002 - 2.0%)

Boron is an optional element that can be used in small amounts in order to increase the hardenability and to improve the hot workability of the stainless steel. The upper limit may then be set to 0.007, 0.006, 0.005 or 0.004 %.
Boron can also be used in higher amounts as a hard phase-forming element. B should then be at least 0.2 % so as to provide the minimum amount of 3 % hard phase $Mo_2FeB_2$. The amount of B is limited to 2.0 % for not making the alloy too brittle. The lower limit may be set to 0.3, 0.4, 0.5, 0.6, 0.7, 0.8, 0.9, 1.0, 1.1, 1.2, 1.3, 1.4 or 1.5 %. The upper limit may be set to 1.4, 1.5, 1.6, 1.7, 1.8 or 1.9 %.

**Sulphur** (0.01 - 0.25 %)

S may optionally be added in order to improve the machinability of the steel. If S is used for this purpose, then S is deliberately added to the steel in an amount of 0.01 - 0.25 %. At higher sulphur contents there is a risk for red brittleness. Moreover, high sulphur contents may have a negative effect on the fatigue properties and on the polishability of the steel. The upper limit shall therefore be 0.25 %, preferably 0.1 % most preferably 0.03 %. A preferred range is 0.015 - 0.030 %. However, if not deliberately added, then the amount of S is restricted to impurity contents as set out below.

**Niobium** ($\leq$ 0.01 %)

Nb is a strong carbide and nitride former. The content of this elements should therefore be limited in order to avoid the formation of undesired carbides and nitrides. The maximum amount of Nb is therefore 0.01 %. Nb is preferably limited to 0.005 %.

**Ti, Zr, Ta, Hf and Y** ($\leq$ 2 %)

These elements may form compounds with C, B, N and/or O. They can be used to produce an Oxide Dispersion Strengthened (ODS) or a Nitride Dispersion Strengthened (NDS) alloy. The upper limit is then 2 % for each of these elements. The upper limit may be 1.5, 1.0, 0.5 or 0.3 %. However, if these elements are not deliberately added for making an ODS alloy, then the upper limit may be 0.1, 0.05, 0.01 or 0.005 %.

**Ca, Mg, O** and **REM** (Rare Earth Metals)

These elements may optionally be added to the steel in the claimed amounts for different reasons. These elements are commonly used to modify the non-metallic inclusion and/or in order to further improve the machinability, hot workability and/or weldability of the steel. The oxygen content is then preferably limited to 0.03 %. However, if Oxygen is used in order to form an Oxide Dispersion Strengthened (ODS) alloy, then the upper limit may be as high as 0.80 %. The oxide can be admixed to a powder of be formed in-situ, e.g. by gas atomizing, in particular by using Gas Atomizing Reaction Synthesis (GARS) or during an Additive Manufacturing (AM) method, in particular through atmospheric reaction in Liquid Metal Deposition (LMD).

**Impurity elements**

P, S and O are the main impurities, which may have a negative effect on the mechanical properties of the steel. P may therefore be limited to 0.05, 0.04, 0.03 0.02 or 0.01 %.
If sulphur is not deliberately added, then the impurity content of S may be limited to 0.05, 0.04, 0.003, 0.001, 0.0008, 0.0005 or even 0.0001%.

The alloys of the present invention can be produced by any suitable method. Nonlimiting examples of suitable methods include:

a) Conventional melt metallurgy followed by casting and hot working.
b) Powder Metallurgy (PM).

PM powders can be produced by conventional gas- or water- atomization of pre-alloyed steel. The powders can be used for thermal spraying, overlay welding, additive manufacturing (AM) or Metal Injection Moulding (MIM).

However, if the powder shall be used for AM, then gas-atomization is the preferred atomization method, because it is important to use a technique, that produces powder particles having a high degree of roundness and a low amount of satellites. In particular, the close-coupled gas atomization method can be used for this purpose.

Powders produced by PM can be consolidated by Hot Isostatic Pressing (HIP) and/or by extrusion. The materials can be used as compacted or after subsequent hot working.

The maximum size of the powder particles should normally be limited to 500 $\mu$m and, depending on the intended use, specific powder fractions may be used. For AM the maximum size range is 5 - 150 $\mu$m, and the preferred size range is 10 - 100 $\mu$m with a mean size of about 25 - 45 $\mu$m. For MIM the preferred maximum size is 50 $\mu$m, for thermal spraying preferred ranges is 32-125 $\mu$m and 20 - 90 $\mu$m and for overlay welding the preferred range is 45 - 250 $\mu$m.

The AM methods of prime interest are Liquid Metal Deposition (LMD), Selective Laser Melting (SLM) and Electron Beam (EB) melting. The powder characteristics are also of importance for AM. The powder size distribution measured with a Camsizer according to ISO 4497 should fulfil the following requirements (in $\mu$m):

$$5 \leq D10 \leq 35$$

$$20 \leq D50 \leq 55$$

$$D90 \leq 80$$

Preferably, the powder should fulfil the following size requirements (in $\mu$m):

$$10 \leq D10 \leq 30$$

$$25 \leq D50 \leq 45$$

$$D90 \leq 70$$

Even more preferred is that the coarse size fraction D90 is limited to $\leq$ 60 $\mu$m or even $\leq$ 55 $\mu$m.

The sphericity of the powder should be high. The sphericity (SPHT) can be measured by a Camsizer and is definded in ISO 9276-6. SPHT = $4\pi A/P^2$, where A is the measured area covered by a particle projection and P is the measured perimeter/circumference of a particle projection. The mean SPHT should be at least 0.80 and can preferably be at least 0.85, 0.90, 0.91, 0.92 0.93, 0.94 or even 0.95. In addition, not more than 5 % of the particles should have a SPHT $\leq$ 0.70. Preferably said value should be less than 0.70, 0.65, 0.55 or even 0.50. In addition to SPHT, the aspect ratio can be used in the classifying of the powder particles. The aspect ratio is defined as b/1, wherein b is the shortest width of the particle projection and 1 is the longest diameter. The mean aspect ratio should preferably be at least 0.85 or more preferably 0. 86, 0.87, 0.88, 0.89, or 0.90.

The inventive alloy is a precipitation hardenable steel having a martensitic matrix, which may comprise other microstructural constituents such as delta ferrite and austenite. The austenite may comprise retained and/or reverted austenite.

The inventive alloy can be hardened by aging in the temperature range of 425 - 600 °C to a desired hardness in the range of about 34 - 56 HRC.

The amount of delta ferrite should preferably be restricted to $\leq 7$ vol. %, preferably $\leq 5$ vol. %, more preferably $\leq 3$ vol. % for not impairing the hot workability.

The austenite consists of retained and/or reverted austenite, in the following, austenite. Pre-alloyed powder produced by atomizing may contain substantial amounts of austenite but the amount of austenite in finished parts may be reduced to a lower level by solution heat treatment and/or ageing, if there is a fear that the austenite content is so high that it could lead to problems e.g. with respect to dimensional stability. The amount of austenite in the microstructure may therefore be limited to 22, 20, 18, 16, 14, 12, 10, 8, 6, 4 or 2 vol. %. However, austenite has a positive effect on the mechanical properties of the material, in particular the toughness, and is therefore a desired microstructural constituent in many applications.

The inventive alloy can be hardened by aging in the temperature range of 425 - 600 °C to a desired hardness in the range of about 34 - 56 HRC.

EXAMPLE 1

Conventional processing.

An alloy was produced in conventional way by induction melting, casting and forging. The alloy had the composition (in wt. %): C: 0.03, Si: 0.3, Mn: 0.2, Cr: 12.0, Ni: 9.3, Mo: 1.4, Al: 1.7, N: 0.017, balance Fe and impurities. The inventive alloy was compared to a commercial available steel of the type steel PH 13-8Mo (Böhler N709). The comparative alloy had the following nominal composition (in wt. %): C: 0.03, Si: $\leq 0.08$, Mn: $\leq 0.08$, Cr: 12.7, Ni: 8.1, Mo: 2.2, Al: 1.1, balance Fe.

The inventive alloy differs from the comparative steel mainly in higher amounts of Mn, Si, Al and N and lower amounts of Mo dissolved in the matrix.

The inventive steel and the comparative steel were both hardened to 50 HRC and subjected to un-notched impact testing using a standard specimen size of 10mmx10mmx55mm. The inventive alloy was found to have an un-notched impact strength of 255 J, whereas the impact strength of the known steel was only 120 J.

The reason for this difference is presently not fully understood. However, it would appear that small differences in the matrix composition lead to differences in the precipitation kinetics such that the type and distribution of the precipitates are different. The lower content of Mo may also result in a reduced risk of the formation of reverted austenite during the heat treatment and thereby also a reduced risk for the precipitation of Mo- and Cr-rich carbides. The addition of Al may result in a grain refinement that is beneficial for the toughness. Hence, it would appear plausible that one or more of these factors in combination result in an improved toughness of the inventive steel.

EXAMPLE 2

Powder production.

A base alloy having the composition similar to the alloy of Example 1 was produced in conventional way by induction melting, casting and forging. A ESR-remelted bar of the alloy was subjected to vacuum induction melting and closed couple gas atomization processing in order to obtain a powder suitable for AM processing. The gas to metal weight ratio during the atomization was 3: 1. In order to avoid oxygen contamination, high purity (6N) nitrogen gas was used for the atomization. The particles obtained were examined with respect to size and shape by dynamic image processing according to ISO 13322-2. The powder was sieved in order to remove particles larger than 50 $\mu$m and smaller than 20 $\mu$m. The sieved powder was found to have the following size distribution: D10: 23 $\mu$m, D50: 34 $\mu$m and D90: 49 $\mu$m. The mean sphericity was 0.95 and the mean aspect ratio was 0.93. The powder had an oxygen content of 0.021 % and a nitrogen content of 0.013 %. The morphology of this powder was examined by Scanning Electron Microscopy (SEM and the powder was found to be almost fully spherical with a very low amount of satellites.

The Apparent Density (AD) was 4.3 g/cm$^3$ and the Tap Density (TD) was 5.2 4.3 g/cm$^3$.

Accordingly, the powder produced would be expected to be suitable for AM processing.

EXAMPLE 3

Additive Manufacturing.

The suitability of this powder for AM was tested by building a part by SLM in an EOS M290 system using the following processing parameters: Layer thickness 30 μm, laser power 170 W, scan speed 1250mm/s, hatch distance 0.10 mm. The hatch mode was stripes.

The as-built samples thus obtained had a density of 99.4 % of the theoretical density (TD) and a hardness of 35 HRC at room temperature. The amount of austenite was about 23 % in the sample. An examination in SEM using EBSD revealed that the austenite phase was extremely fine in size and dispersed at the boundaries of the martensite blocks.

The influence of the thermal treatment of the built sample was examined. After ageing at 525°C for 4 h the amount of austenite was reduced to 16 vol. %. However, an intermediate solution treatment at 850 °C for 30 minutes reduced the amount of austenite to 4 vol. %. The hardness of the solution annealed and aged sample was 50 HRC.

Hence, the solution annealed and the aged sample have the same hardness as the conventionally produced sample of Example 1. The reason for this might be, that the conventionally produced sample also has an austenite content of about vol. 4 %. It was therefore decided to compare the mechanical properties of the solution treated and aged AM sample with the properties of the conventionally produced steel in Example 1. The strength and elongation values were measured by uniaxial tensile testing and the impact toughness was measured by the Charpy V-notch test. The results are given below in Table 1. It can be seen that the material produced by AM has a considerably higher Impact toughness than the conventionally produced material and that the other mechanical values are comparable.

Table 1. Results of the mechanical testing.

| Sample | Rm (MPa) | $Rp_{02}$ (MPa) | Elongation A5 (%) | Impact toughness (J) |
|---|---|---|---|---|
| Conv. (EX. 1) | 1700 | 1600 | 10 | 3 (S-T) 6 (L-T) |
| AM (EX. 3). Perpendicular to build plate | 1700 | 1640 | 9 | 19 |
| AM (EX.3) Parallel to build plate | 1650 | 1560 | 10 | 22 |

The corrosion and wear testing revealed, that the two materials are equally good. The polishability was also examined and it was found that the AM material exhibits an excellent polishability. It was possible to achieve a comparably good high quality gloss surface for both materials, although the oxygen content was about 10 times higher for the AM material. However, surprisingly it was found that the AM material was much easier to polish in that the AM-material could be polished to the same gloss with fewer steps in a shorter time.

INDUSTRIAL APPLICABILITY

The steel of the present invention is useful in large moulds or dies requiring a good corrosion resistance and a uniform hardness. The steel of the present invention is particular for making articles by AM

**Claims**

1. A steel for making a mould for forming plastics, the steel consists of, in weight % (wt. %):

| | Min | Max |
|---|---|---|
| C | 0.02 | 0.04 |
| Si | 0.1 | 0.4 |
| Mn | 0.1 | 0.5 |
| Cr | 11 | 13 |
| Ni | 7.8 | 10 |
| Cr+Ni | 19.5 | 23 |
| Mo | 1 | 25 |

(continued)

|  | Min | Max |
|---|---|---|
| Al | 1.4 | 2.0 |
| N | 0.01 | 0.75 |
| optionally | | |
| Cu | 0.05 | 2.5 |
| B | 0.002 | 2.0 |
| S | 0.01 | 0.25 |
| Nb | | 0.01 |
| Ti | | 2 |
| Zr | | 2 |
| Ta | | 2 |
| Hf | | 2 |
| Y | | 2 |
| Ca | 0.0003 | 0.009 |
| Mg | | 0.01 |
| O | 0.003 | 0.80 |
| REM | | 0.2 |

Fe and impurities balance.

2. A steel according to claim 1, which fulfils at least one of the following requirements:

|  | Min | Max |
|---|---|---|
| C | 0.025 | 0.035 |
| Si | 0.15 | 0.40 |
| Mn | 0.15 | 0.50 |
| Cr | 11.5 | 12.5 |
| Ni | 8.5 | 10.0 |
| Cr+Ni | 20 | 23 |
| Mo | 1.0 | 2.0 |
| Al | 1.5 | 1.9 |
| N | 0.01 | 0.15 |
| S | 0.01 | 0.03 |

and/or the steel has a mean hardness in the range of 320-510 $HBW_{10/3000}$, wherein the steel has a thickness of at least 100 mm and the maximum deviation from the mean Brinell hardness value in the thickness direction measured in accordance with ASTM E10-01 is less than 10 %, preferably less than 5 %, and wherein the minimum distance of the centre of the indentation from the edge of the specimen or edge of another indentation shall be at least two and a half times the diameter of the indentation and the maximum distance shall be no more than 4 times the diameter of the indentation,
and/or
the steel has a cleanliness fulfilling the following maximum requirements with respect to micro-slag according to ASTM E45-97, Method A:

| A | A | B | B | C | C | D | D |
|---|---|---|---|---|---|---|---|
| T | H | T | H | T | H | T | H |
| 1.0 | 0 | 1.5 | 1.0 | 0 | 0 | 1.5 | 1.0 |

3. A steel according to claim 1 or 2, which is not alloyed with S and fulfils at least one of the following requirements:

|  | Min | Max |
|---|---|---|
| N | 0.01 | 0.04 |
| Cu | 0.5 | 2.1 |
| Cr+Ni | 20.5 | 22.0 |
| Mo | 1.2 | 1.6 |
| S |  | 0.01 |
| Ti |  | 0.01 |
| Zr |  | 0.01 |
| Ta |  | 0.01 |
| Hf |  | 0.01 |
| Y |  | 0.01 |

wherein the microstructure fulfils at least one of the following requirements:

the matrix comprises $\geq$ 75 vol. % martensite,
the matrix comprises $\leq$ 7 vol. % delta ferrite,
the matrix comprises 2 - 22 vol. % austenite,
the matrix hardness is 40 - 56 HRC,
the size of all AlN particles is $\leq$ 4$\mu$m,
the un-notched impact toughness is $\geq$ 200 J,
the compressive yield strength $Rc_{0.2}$ is at 10 - 30 % higher than the tensile yield strength $Rp_{0.2}$

4. A steel according to claim 1, which fulfils the following requirements:

|  | Min | Max |
|---|---|---|
| C | 0.025 | 0.035 |
| Si | 0.15 | 0.40 |
| Mn | 0.15 | 0.50 |
| Cr | 11.5 | 12.5 |
| Ni | 8.5 | 10.0 |
| Cr+Ni | 20 | 23 |
| Mo | 1.0 | 2.0 |
| Al | 1.5 | 1.9 |
| N | 0.01 | 0.15 |

wherein the microstructure fulfils at least one of the following requirements:

the matrix comprises $\geq$ 80 vol. % martensite,
the matrix comprises 4 - 20 vol. % austenite.

5. A pre-alloyed powder having a composition as defined in any of claims 1 - 4.

6. A pre-alloyed powder as defined in claim 5, wherein the powder is produced by gas atomizing, at least 80 % of the powder particles have a size in the range of 5 to 150 $\mu$m the and wherein the powder fulfils at least one of the following requirements:

| Powder size distribution (in $\mu$m): | 5 $\leq$ | D10 | $\leq$ 35 |
|---|---|---|---|
|  | 20 $\leq$ | D50 | $\leq$ 55 |
|  |  | D90 | $\leq$ 80 |
| Mean sphericity, SPHT | $\geq$ 0.85 | | |
| Mean aspect ratio, b/l | $\geq$ 0.85 | | |

wherein SPHT = $4\pi A/P^2$, where A is the measured area covered by a particle projection and P is the measured perimeter/circumference of a particle projection and the sphericity (SPHT) is measured by a Camsizer in accordance with ISO 9276-6, and wherein b is the shortest width of the particle projection and 1 is the longest diameter.

7. A pre-alloyed powder as defined in claim 6, wherein at least 90 % of the powder particles have a size in the range of 10 to 100 $\mu$m the and wherein the powder fulfils at least one of the following requirements:

| | | | |
|---|---|---|---|
| Powder size distribution (in $\mu$m): | $10 \leq$ | D10 | $\leq 30$ |
| | $25 \leq$ | D50 | $\leq 45$ |
| | D90 | $\leq 70$ | |
| Mean sphericity, SPHT | $\geq 0.90$ | | |
| Mean aspect ratio, b/l | $\geq 0.88$ | | |

8. An article formed by an additive manufacturing method using a pre-alloyed powder as defined in any of claims 5 to 7, wherein the article fulfils at least one of the following requirements:

the matrix comprises $\geq 80$ vol. % martensite,
the matrix comprises $\leq 5$ vol. % delta ferrite,
the matrix comprises 2 - 22 vol. % austenite,
the matrix hardness is 34 - 56 HRC,
the size of all AlN particles is $\leq 4\mu$m,
the Charpy V-notch value perpendicular to the build direction is $\geq 5$ J,
the tensile strength $R_m$ perpendicular to the build direction is $\geq 1600$ MPa,
the yield strength $Rc_{0.2}$ perpendicular to the build direction is $\geq 1500$ MPa,
the compressive yield strength $Rc_{0.2}$ perpendicular to the build direction is at least 10 % higher than tensile yield strength $Rp_{0.2}$.

9. An article according to claim 8, wherein the article is at least a part of a mould for forming plastic and wherein the article optionally fulfils at least one of the following requirements:

the matrix comprises $\geq 85$ vol. % martensite,
the matrix comprises $\leq 2$ vol. % delta ferrite,
the matrix comprises 4 - 15 vol. % austenite,
the matrix hardness is 40 - 50 HRC,
the Charpy V-notch value perpendicular to the build direction is $\geq 10$ J.

and/or
the article has a cleanliness fulfilling the following maximum requirements with respect to micro-slag according to ASTM E45-97, Method A:

| A | A | B | B | C | C | D | D |
|---|---|---|---|---|---|---|---|
| T | H | T | H | T | H | T | H |
| 1.0 | 0 | 1.5 | 1.0 | 0 | 0 | 1.5 | 1.0 |

10. Use of a pre-alloyed powder according to any of claim 5 to 7 for making a solid object by the use of any of the methods of hot isostatic pressing, powder extrusion and additive manufacturing or for providing a surface layer on a substrate by thermal spraying, laser cladding, cold spraying or overlay welding.

**Patentansprüche**

1. Stahl zur Herstellung einer Form zur Formung von Kunststoffen, wobei der Stahl in Gewichtsprozent (Gew.-%) aus:

|       | Min    | Max   |
|-------|--------|-------|
| C     | 0,02   | 0,04  |
| Si    | 0,1    | 0,4   |
| Mn    | 0,1    | 0,5   |
| Cr    | 11     | 13    |
| Ni    | 7,8    | 10    |
| Cr+Ni | 19,5   | 23    |
| Mo    | 1      | 25    |
| Al    | 1,4    | 2,0   |
| N     | 0,01   | 0,75  |
| wahlweise |    |       |
| Cu    | 0,05   | 2,5   |
| B     | 0,002  | 2,0   |
| S     | 0,01   | 0,25  |
| Nb    |        | 0,01  |
| Ti    |        | 2     |
| Zr    |        | 2     |
| Ta    |        | 2     |
| Hf    |        | 2     |
| Y     |        | 2     |
| Cu    | 0,0003 | 0,009 |
| Mg    |        | 0,01  |
| O     | 0,003  | 0,80  |
| REM   |        | 0,2   |

Fe und Rest von Verunreinigungen besteht.

2. Stahl nach Anspruch 1, welcher mindestens eine der folgenden Anforderungen erfüllt:

|       | Min   | Max   |
|-------|-------|-------|
| C     | 0,025 | 0,035 |
| Si    | 0,15  | 0,40  |
| Mn    | 0,15  | 0,50  |
| Cr    | 11,5  | 12,5  |
| Ni    | 8,5   | 10,0  |
| Cr+Ni | 20    | 23    |
| Mo    | 1,0   | 2,0   |
| Al    | 1,5   | 1,9   |
| N     | 0,01  | 0,15  |
| S     | 0,01  | 0,03  |

und/oder der Stahl eine mittlere Härte im Bereich von 320-510 $HBW_{10/3000}$ aufweist, wobei der Stahl eine Dicke von mindestens 100 mm aufweist, und die maximale Abweichung vom mittleren Brinel-Härtewert in der Dickenrichtung, gemessen gemäß ASTM El 0-01, weniger als 10 %, vorzugsweise weniger als 5 %, beträgt, und wobei der Mindestabstand der Mitte des Eindrucks von der Kante des Prüflings oder der Kante eines anderen Eindrucks mindestens das Zweieinhalbfache des Durchmessers des Eindrucks betragen soll, und der Höchstabstand nicht mehr als das Vierfache des Durchmessers des Eindrucks betragen soll,
und/oder
der Stahl eine Reinheit aufweist, welche die folgenden Höchstanforderungen in Bezug auf die Mikroschlacke gemäß ASTM E45-97, Methode A, erfüllt:

| A | A | B | B | C | C | D | D |
|---|---|---|---|---|---|---|---|
| T | H | T | H | T | H | T | H |
| 1,0 | 0 | 1,5 | 1,0 | 0 | 0 | 1,5 | 1,0 |

3. Stahl nach Anspruch 1 oder 2, welcher nicht mit S legiert ist und mindestens eine der folgenden Anforderungen erfüllt:

| | Min | Max |
|---|---|---|
| N | 0,01 | 0,04 |
| Cu | 0,5 | 2,1 |
| Cr+Ni | 20,5 | 22,0 |
| Mo | 1,2 | 1,6 |
| S | | 0,01 |
| Ti | | 0,01 |
| Zr | | 0,01 |
| Ta | | 0,01 |
| Hf | | 0,01 |
| Y | | 0,01 |

wobei die Mikrostruktur mindestens eine der folgenden Anforderungen erfüllt:

die Matrix umfasst $\geq$ 75 Vol.-% Martensit,
die Matrix umfasst $\leq$ 7 Vol.-% Deltaferrit,
die Matrix umfasst 2 - 22 Vol.-% Austenit,
die Matrixhärte beträgt 40 - 56 HRC,
die Größe aller AlN-Teilchen beträgt $\leq$ 4 $\mu$m,
die ungekerbte Kerbschlagzähigkeit beträgt $\geq$ 200 J,
die Druckstreckfestigkeit $Rc_{0.2}$ liegt um 10 - 30 % höher als die Zugstreckfestigkeit $Rp_{0.2}$

4. Stahl nach Anspruch 1, welcher die folgenden Anforderungen erfüllt:

| | Min | Max |
|---|---|---|
| C | 0,025 | 0,035 |
| Si | 0,15 | 0,40 |
| Mn | 0,15 | 0,50 |
| Cr | 11,5 | 12,5 |
| Ni | 8,5 | 10,0 |
| Cr+Ni | 20 | 23 |
| Mo | 1,0 | 2,0 |
| Al | 1,5 | 1,9 |
| N | 0,01 | 0,15 |

wobei die Mikrostruktur mindestens eine der folgenden Anforderungen erfüllt:

die Matrix umfasst $\geq$ 80 Vol.-% Martensit,
die Matrix umfasst 4 - 20 Vol.-% Austenit.

5. Vorlegiertes Pulver, das eine Zusammensetzung nach einem der Ansprüche 1 bis 4 aufweist.

6. Vorlegiertes Pulver nach Anspruch 5, wobei das Pulver durch Gaszerstäubung hergestellt wird, mindestens 80 % der Pulverteilchen eine Größe im Bereich von 5 bis 150 $\mu$m aufweisen, und wobei das Pulver mindestens eine der folgenden Anforderungen erfüllt:

| Pulvergrößenverteilung (in $\mu$m): | 5 $\leq$ | D10 | $\leq$ 35 |
|---|---|---|---|
| | 20 $\leq$ | D50 | $\leq$ 55 |
| | | D90 | $\leq$ 80 |
| Mittlere Sphärizität, SPHT | | $\geq$ 0,85 | |
| Mittleres Aspektverhältnis, b/l | | $\geq$ 0,85 | |

wobei SPHT = $4\pi A/P^2$, wo A der von einer Teilchenprojektion bedeckte gemessene Bereich ist, und P der gemessene Umfang/Umkreis einer Teilchenprojektion ist, und die Sphärizität (SPHT) durch einen Camsizer gemäß ISO 9276-6 gemessen wird, und wobei b die kürzeste Breite der Teilchenprojektion ist, und l der längste Durchmesser ist.

7. Vorlegiertes Pulver nach Anspruch 6, wobei mindestens 90 % der Pulverteilchen eine Größe im Bereich von 10 bis 100 $\mu$m aufweisen, und wobei das Pulver mindestens eine der folgenden Anforderungen erfüllt:

| Pulvergrößenverteilung (in $\mu$m): | 10 $\leq$ | D10 | $\leq$ 30 |
|---|---|---|---|
| | 25 $\leq$ | D50 | $\leq$ 45 |
| | D90 | $\leq$ 70 | |
| Mittlere Sphärizität, SPHT | | $\geq$ 0,90 | |
| Mittleres Aspektverhältnis, b/l | | $\geq$ 0,88 | |

8. Artikel, der mittels eines zusätzlichen Herstellungsverfahrens unter Verwendung eines vorlegierten Pulvers nach einem der Ansprüche 5 bis 7 geformt wird, wobei der Artikel mindestens eine der folgenden Anforderungen erfüllt:

die Matrix umfasst $\geq$ 80 Vol.-% Martensit,
die Matrix umfasst $\leq$ 5 Vol.-% Deltaferrit,
die Matrix umfasst 2 - 22 Vol.-% Austenit,
die Matrixhärte beträgt 34 - 56 HRC,
die Größe aller AlN-Teilchen beträgt $\leq$ 4 $\mu$m,
Der zur Aufbaurichtung senkrechte Charpy V-Kerbwert beträgt $\geq$ 5 J,
die zur Aufbaurichtung senkrechte Zugfestigkeit $R_m$ beträgt $\geq$ 1600 MPa,
die zur Aufbaurichtung senkrechte Streckfestigkeit $Rc_{0,2}$ beträgt $\geq$ 1500 MPa,
die zur Aufbaurichtung senkrechte Druckstreckfestigkeit $Rc_{0,2}$ beträgt mindestens 10% höher als die Zugstreckfestigkeit $Rp_{0,2}$.

9. Artikel nach Anspruch 8, wobei der Artikel mindestens ein Teil einer Form zur Formung von Kunststoff ist, und wobei der Artikel wahlweise mindestens eine der folgenden Anforderungen erfüllt:

die Matrix umfasst $\geq$ 85 Vol.-% Martensit,
die Matrix umfasst $\leq$ 2 Vol.-% Deltaferrit,
die Matrix umfasst 4 - 15 Vol.-% Austenit,
die Matrixhärte beträgt 40 - 50 HRC,
Der zur Aufbaurichtung senkrechte Charpy V-Kerbwert beträgt $\geq$ 10 J,

und/oder
der Artikel weist eine Reinheit auf, welche die folgenden Höchstanforderungen in Bezug auf die Mikroschlacke gemäß ASTM E45-97, Methode A, erfüllt:

| A | A | B | B | C | C | D | D |
|---|---|---|---|---|---|---|---|
| T | H | T | H | T | H | T | H |
| 1,0 | 0 | 1,5 | 1,0 | 0 | 0 | 1,5 | 1,0 |

10. Verwendung eines vorlegierten Pulvers nach einem der Ansprüche 5 bis 7 zur Herstellung eines festen Gegenstandes durch die Verwendung eines der Verfahren zum heißisostatischen Pressen, zur Pulverextrusion und einer zusätzlichen Herstellung oder zur Bereitstellung einer Oberflächenschicht auf einem Substrat durch thermisches Spritzen, Laserauftragschweißen, Kaltspritzen oder Auftragschweißen.

**Revendications**

1. Acier pour la fabrication de moules de formage de matières plastiques, l'acier est constitué de, en poids (poids %) :

|  | Min | Max |
|---|---|---|
| C | 0,02 | 0,04 |
| Si | 0,1 | 0,4 |
| Mn | 0,1 | 0,5 |
| Cr | 11 | 13 |
| Ni | 7,8 | 10 |
| Cr+Ni | 19,5 | 23 |
| Mo | 1 | 25 |
| Al | 1,4 | 2,0 |
| N | 0,01 | 0,75 |
| éventuellement |  |  |
| Cu | 0,05 | 2,5 |
| B | 0,002 | 2,0 |
| S | 0,01 | 0,25 |
| No |  | 0,01 |
| Ti |  | 2 |
| Zr |  | 2 |
| Ta |  | 2 |
| Hf |  | 2 |
| Y |  | 2 |
| Cu | 0,0003 | 0,009 |
| Mg |  | 0,01 |
| O | 0,003 | 0,80 |
| REM |  | 0,2 |

Fe et le solde en impuretés.

2. Acier selon la revendication 1 satisfaisant à au moins l'une des exigences suivantes :

|  | Min | Max |
|---|---|---|
| C | 0,025 | 0,035 |
| Si | 0,15 | 0,40 |
| Mn | 0,15 | 0,50 |
| Cr | 11,5 | 12,5 |
| Ni | 8,5 | 10,0 |
| Cr+Ni | 20 | 23 |
| Mo | 1,0 | 2,0 |
| Al | 1,5 | 1,9 |
| N | 0,01 | 0,15 |
| S | 0,01 | 0,03 |

et / ou l'acier a une dureté moyenne dans l'intervalle de 320-510 $HBW_{10/3000}$, l'acier ayant une épaisseur d'au moins 100 mm et l'écart maximal par rapport à la valeur de la dureté Brinell moyenne dans le sens de l'épaisseur, mesuré conformément à ASTM EI 0-01 est inférieur à 10%, de préférence inférieur à 5%, et dans lequel la distance minimale entre le centre de l'empreinte du bord de l'échantillon ou du bord d'une autre empreinte doit être au moins deux fois et demie le diamètre de l'empreinte et de la distance maximale ne doit pas dépasser 4 fois le diamètre de l'empreinte,

et / ou

l'acier doit avoir une propreté répondant aux exigences maximales suivantes en ce qui concerne les micro-scories selon la norme ASTM E45-97, méthode A:

| A | A | B | B | C | C | D | D |
|---|---|---|---|---|---|---|---|
| T | H | T | H | T | H | T | H |
| 1,0 | 0 | 1,5 | 1,0 | 0 | 0 | 1,5 | 1,0 |

3. Acier selon la revendication 1 ou 2, qui n'est pas allié au S et qui remplit au moins l'une des exigences suivantes :

|  | Min | Max |
|---|---|---|
| N | 0,01 | 0,04 |
| Cu | 0,5 | 2,1 |
| Cr+Ni | 20,5 | 22,0 |
| Mo | 1,2 | 1,6 |
| S |  | 0,01 |
| Ti |  | 0,01 |
| Zr |  | 0,01 |
| Tu |  | 0,01 |
| Hf |  | 0,01 |
| Y |  | 0,01 |

où la microstructure remplit au moins l'une des exigences suivantes :

la matrice comprend $\geq$ 75 vol. % de martensite,
la matrice comprend $\geq$ 7 vol. % de ferrite delta,
la matrice comprend de 2 à 22 vol. % d'austénite,
la dureté de la matrice est de 40 à 56 HRC,
la taille de toutes les particules de AlN est $\leq$ 4 $\mu$m,
la ténacité sans encoche est $\geq$ 200 J,
la limite d'élasticité en compression $Rc_{0,2}$ est supérieure de 10 à 30 % à la limite d'élasticité en traction $Rp_{0,2}$.

4. Acier selon la revendication 1, qui remplit les exigences suivantes :

|  | Min | Max |
|---|---|---|
| C | 0,025 | 0,035 |
| Si | 0,15 | 0,40 |
| Mn | 0,15 | 0,50 |
| Cr | 11,5 | 12,5 |
| Ni | 8,5 | 10,0 |
| Cr+Ni | 20 | 23 |
| Mo | 1,0 | 2,0 |
| Al | 1,5 | 1,9 |
| N | 0,01 | 0,15 |

où la microstructure remplit au moins l'une des exigences suivantes :

la matrice comprend $\geq$ 80 vol. % de martensite,
la matrice comprend de 4 à 20 vol. % d'austénite,

**5.** Poudre pré-alliée ayant une composition telle que définie dans l'une quelconque des revendications 1 à 4.

**6.** Poudre pré-alliée selon la revendication 5, dans laquelle la poudre est produite par atomisation au gaz, au moins 80% des particules de poudre ont une taille dans la plage de 5 à 150 $\mu$m et dans laquelle la poudre remplit au moins l'une des exigences suivantes :

| Distribution granulométrique (en $\mu$m) : | | | |
|---|---|---|---|
| | 5 ≤ | D10 | ≤ 35 |
| 20 ≤ | D50 | ≤ 55 | |
| | D90 | ≤ 80 | |
| Sphéricité moyenne, SPHT | ≥ 0,85 | | |
| Rapport de forme moyen, b/l | ≥ 0,85 | | |

où SPHT = $4\pi A/P^2$, où A est la surface mesurée couverte par une projection de particules et P est le périmètre / circonférence mesuré d'une projection de particules et la sphéricité (SPHT) est mesurée par un Camsizer conformément à la norme ISO 9276-6 et où b est la plus petite largeur de projection de particules et l est le plus long diamètre.

**7.** Poudre pré-alliée selon la revendication 6, dans laquelle au moins 90% des particules de poudre ont une taille dans la plage de 10 à 100 $\mu$m et dans laquelle la poudre remplit au moins l'une des exigences suivantes :

| Distribution granulométrique (en $\mu$m): | | | |
|---|---|---|---|
| | 10 ≤ | D10 | ≤ 30 |
| 25 ≤ | D50 | ≤ 45 | |
| D90 | ≤ 70 | | |
| Sphéricité moyenne, SPHT | ≥ 0,90 | | |
| Rapport de forme moyen, b/l | ≥ 0,88 | | |

**8.** Article formé selon un procédé de fabrication additive à l'aide d'une poudre préalliée telle que définie dans revendications 5 à 7, où l'article remplit au moins l'une des exigences suivantes :

la matrice comprend ≥ 80 vol. % de martensite,
la matrice comprend ≥ 5 vol. % de ferrite delta,
la matrice comprend de 2 à 22 vol. % d'austénite,
la dureté de la matrice est de 34 à 56 HRC,
la taille de toutes les particules de AlN est ≤ 4$\mu$m,
la valeur de l'encoche V de Charpy perpendiculaire au sens de construction est ≥ 5 J,
la résistance à la traction $R_m$ perpendiculaire au sens de construction est ≥ 1600 MPa,
la limite d'élasticité $R_{0,2}$ perpendiculaire au sens de construction est ≥ 1500 MPa,
la limite d'élasticité en compression $Rc_{0,2}$ perpendiculaire au sens de construction est supérieure d'au moins 10% à la limite d'élasticité en traction $Rp_{0,2}$.

**9.** Article selon la revendication 8, dans lequel l'article est au moins une partie d'un moule pour former du plastique et dans lequel l'article remplit éventuellement au moins l'une des exigences suivantes :

la matrice comprend ≥ 85 vol. % de martensite,
la matrice comprend ≥ 2 vol. % de ferrite delta,
la matrice comprend de 4 à 15 vol. % d'austénite,
la dureté de la matrice est de 40 à 50 HRC,
la valeur de l'encoche V de Charpy perpendiculaire au sens de construction est ≥ 10 J,

et / ou
l'article a une propreté répondant aux exigences maximales suivantes en ce qui concerne les micro-scories selon la norme ASTM E45-97, méthode A :

| A | A | B | B | C | C | D | D |
|---|---|---|---|---|---|---|---|

(suite)

| T | H | T | H | T | H | T | H |
|---|---|---|---|---|---|---|---|
| 1,0 | 0 | 1,5 | 1,0 | 0 | 0 | 1,5 | 1,0 |

10. Utilisation d'une poudre pré-alliée selon l'une quelconque des revendications 5 à 7 pour fabriquer un objet solide en utilisant l'un quelconque des procédés de compression isostatique à chaud, d'extrusion de poudre et de fabrication d'additifs ou pour former une couche de surface sur un substrat par projection thermique, bardage laser, projection à froid ou soudure par recouvrement.

**EP 3 472 365 B1**

**REFERENCES CITED IN THE DESCRIPTION**

**Patent documents cited in the description**

- EP 459547 A
- WO 2015137507 A1